# EUROPÄISCHE PATENTANMELDUNG

(11) **EP 0 896 032 A1**
(43) Veröffentlichungstag der Anmeldung: **10.02.1999**
(21) Anmeldenummer: 98113972.8
(22) Anmeldetag: 25.07.1998
(51) Int. Cl.: C09B 35/029, C09B 35/30, C09B 43/16, C09D 11/00, D21H 21/28

(54) **Substantive Disund Trisazofarbstoffe**

(30) Priorität: 08.08.1997 DE 19734387
(71) Anmelder: BAYER AG, 51368 Leverkusen (DE)
(72) Erfinder: Wild, Peter, Dr., 51519 Odenthal (DE)

(57) **Zusammenfassung**

Verbindungen der Formel (I) 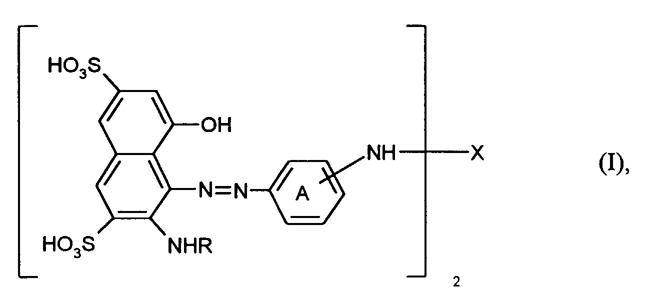 worin
- X: ein Brückenglied bedeutet,
der Ring A unsubstituiert oder durch einen oder mehrere gleiche oder verschiedene Reste ausgewählt aus der Gruppe SO₃H, COOH, Sulfonsäureester, -amide, Carbonsäureester, -amide und CN substituiert ist und R Wasserstoff oder unsubstituiertes oder substituiertes C₁-C₄-Alkyl bedeutet, eignen sich besonders zur Herstellung von lichtechten und brillanten Magenta-Färbungen und -Drucken, insbesondere auf dem Gebiet des Ink-Jet-Druckes.

## Beschreibung

Die Erfindung betrifft substantive Disazofarbstoffe, ein Verfahren zu ihrer Herstellung sowie ihre Verwendung zum Färben und Bedrucken hydroxyl- und/oder amidgruppenhaltiger Substrate.

Disazofarbstoffe, die aus zwei über eine CO-Gruppe verbrückte Monoazofarbstoffe bestehen, sind bekannt. Ein entsprechender Farbstoff ist beispielsweise C.I. Direct Red 75, der die Formel 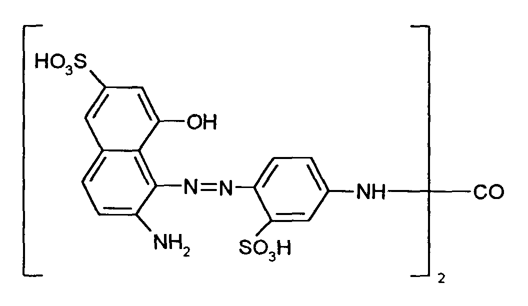 besitzt und gemäß JP-A 9 025 850 in Drucktinten für den Ink-Jet-Druck eingesetzt wird. Insbesondere im Hinblick auf Lichtechtheit und Brillanz sind die Eigenschaften dieses Farbstoffes noch verbesserungsfähig. Aufgabe der vorliegenden Erfindung war es, Farbstoffe mit verbesserter Lichtechtheit und Brillanz bereitzustellen.

Es wurden nun Verbindungen gefunden, die in Form ihrer freien Säure der Formel (I) entsprechen 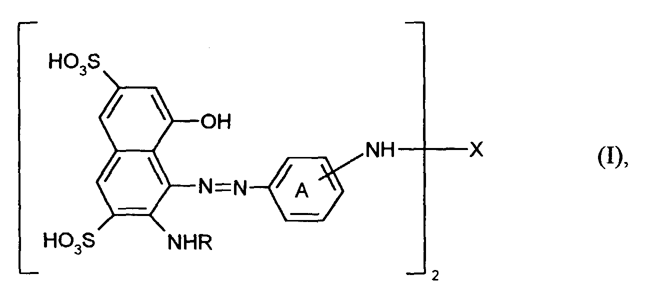 worin
- X: ein Brückenglied bedeutet,
der Ring A durch einen oder mehrere gleiche oder verschiedene Reste ausgewählt aus der Gruppe SO₃H, COOH, Sulfonsaüreester, -amide, Carbonsäureester, -amide und CN substituiert ist,
und
- R: Wasserstoff oder unsubstituiertes oder substituiertes C₁-C₄-Alkyl bedeutet.

Als Substituenten der Alkylgruppen in der Bedeutung von R sind OH, OCH₃ oder OC₂H₅ bevorzugt.

Die Säurereste des Ringes A können in Form ihrer Säureester oder Säureamide vorliegen. Als Säureester sind beispielsweise die unsubstituierten oder substituierten C₁-C₄-Alkylester zu nennen. Als Säureamide sind vorzugsweise solche der Formeln SO₂NR¹'R¹'' sowie CONR¹'R¹'' zu nennen, wobei R¹' und R¹'' unabhängig voneinander für Wasserstoff oder unsubstituiertes oder substituiertes C₁-C₄-Alkyl stehen.

Bevorzugt sind Verbindungen der Formel (I), die in Form ihrer freien Säure der Formel (Ia) entsprechen 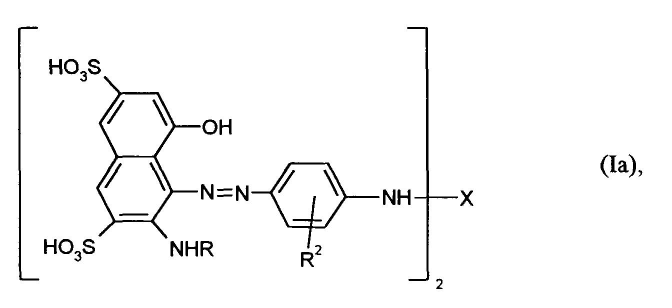 worin

- R und X: die oben angegebene Bedeutung besitzen und
- R²: für SO₃H, COOH oder CN, insbesondere SO₃H oder COOH steht.

In einer weiteren bevorzugten Ausführungsform steht R für Wasserstoff

Besonders bevorzugt sind Verbindungen der Formel (I), die in Form ihrer freien Säure der Formel (Ib) entsprechen 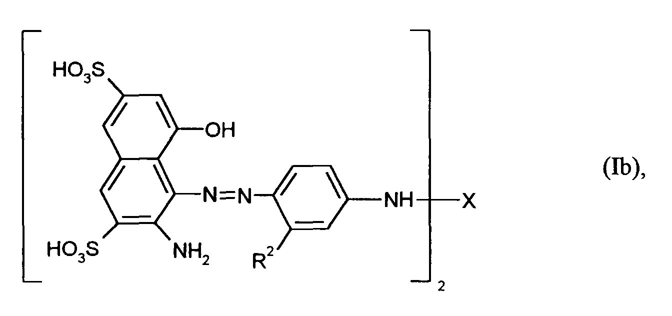 worin R² und X die obengenannte Bedeutung haben. Ganz besonders bevorzugt sind Farbstoffe der Formel (Ib), worin R² für SO₃H oder COOH, insbesondere SO₃H steht.

In einer bevorzugten Ausführungsform steht X für CO, einen Rest einer aliphatischen, aromatisch-carbocyclischen-, heterocyclischen oder aromatisch-heterocyclischen Dicarbonylverbindung oder für einen Rest der Formel 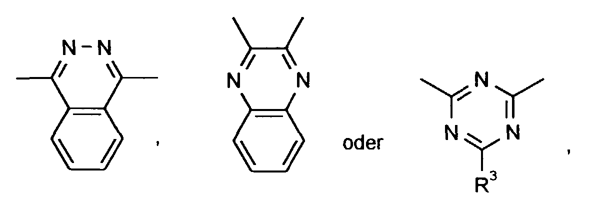 worin
- R³: für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂ oder mono- oder disubstituiertes Amin, wie mono- oder di-C₁-C₄-Alkylamino oder -C₆-C₁₀-Arylamino oder für ein cyclisches 5- oder 6-gliedriges Amin steht.

In einer besonders bevorzugten Ausführungsform steht R³ für NR⁴R⁵, wobei
- R⁴ und R⁵: unabhängig voneinander Wasserstoff, C₁-C₄-Alkyl, C₂-C₄-Hydroxyalkyl oder C₂-C₄-Hydroxyalkoxy-C₂-C₄-alkyl bedeuten oder NR⁴R⁵ einen 5- oder 6-gliedrigen Ring bildet, der 1 bis 3 Heteroatome einschließt und der unsubstituiert oder substituiert ist durch 1 bis 3 Substituenten aus der Reihe C₁-C₄-Alkyl und durch Hydroxy oder Amino monosubstituiertes C₂-C₄-Alkyl, und deren Salze.

Jeder für R⁴ oder R⁵ definierte Alkyl- oder substituierte Alkylrest kann geradlinig oder verzweigt sein.

In einer hydroxy- oder hydroxyalkoxy-substituierten Alkylgruppe, die an ein N-Atom gebunden ist, befindet sich die Hydroxy- oder Hydroxyalkoxygruppe bevorzugt nicht an einem dem N-Atom benachbarten C-Atom. Ebenso befindet sich die Hydroxygruppe in einer Hydroxyalkoxygruppe bevorzugt nicht an einem dem O-Atom benachbarten C-Atom.

Bedeutet -NR⁴R⁵ einen heterocyclischen Ring, so kann dieser zusätzlich zum Stickstoffatom 1 oder 2 weitere Heteroatome aus der Reihe N, O und S enthalten. Bevorzugt stehen R⁴ für Wasserstoff, C₁-C₂-Alkyl oder C₂-C₃-Hydroxyalkyl und R⁵ für C₂-C₃-Hydroxyalkyl oder C₂-C₃-Hydroxyalkoxy-C₂-C₃-alkyl, oder -NR⁴R⁵ für einen Pyrrolidin-, Piperidin-, Morpholin- oder Piperazin-Ring, der durch eine bis drei Gruppen aus der Reihe Methyl und/oder durch Hydroxy oder Amino monosubstituiertes C₂-C₃-Alkyl substituiert sein kann.

Besonders bevorzugt stehen R⁴ für Wasserstoff, Methyl oder C₂-C₃-Hydroxyalkyl, und R⁵ für C₂-C₃-Hydroxyalkyl, oder -NR⁴R⁵ für einen Piperidin-, Morpholin-, Piperazin- oder 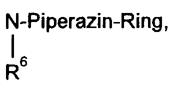 worin
- R⁶: Methyl, Ethyl, 2-Hydroxyethyl oder 2-Aminoethyl bedeutet.

Insbesondere bevorzugt stehen R⁴ für Wasserstoff oder 2-Hydroxyethyl und R⁵ für 2-Hydroxyethyl.
- X: steht bevorzugt für 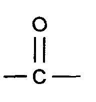 oder einen Rest einer Dicarbonylverbindung der Formel 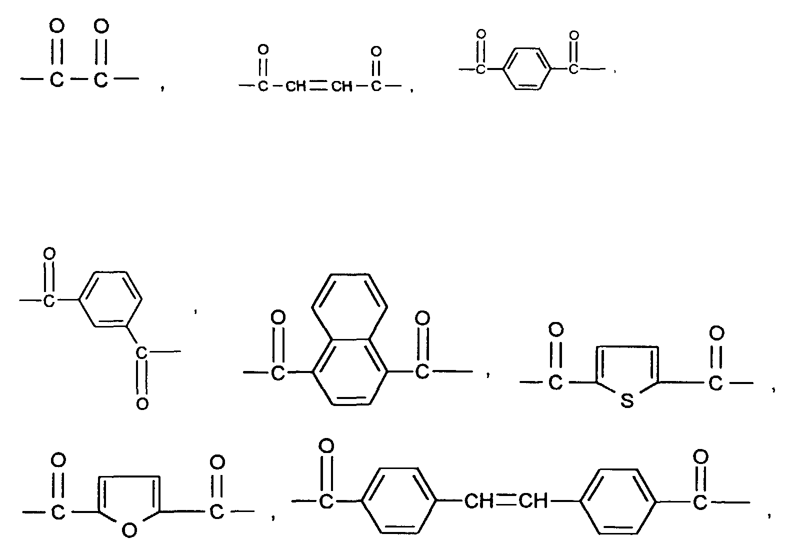 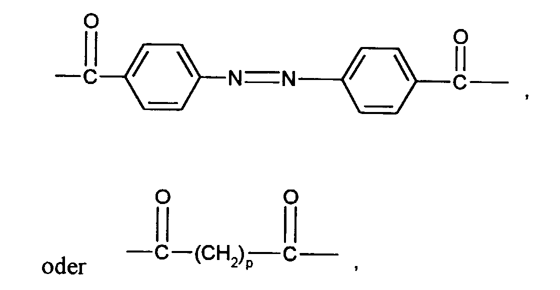
worin
- p: eine Zahl von 1 bis 6 bedeutet
oder
- X: für einen bivalenten Rest der Formel 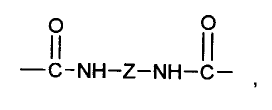
worin Z 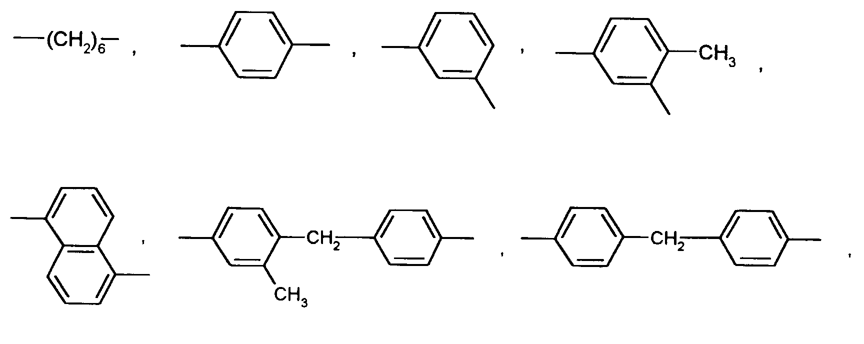 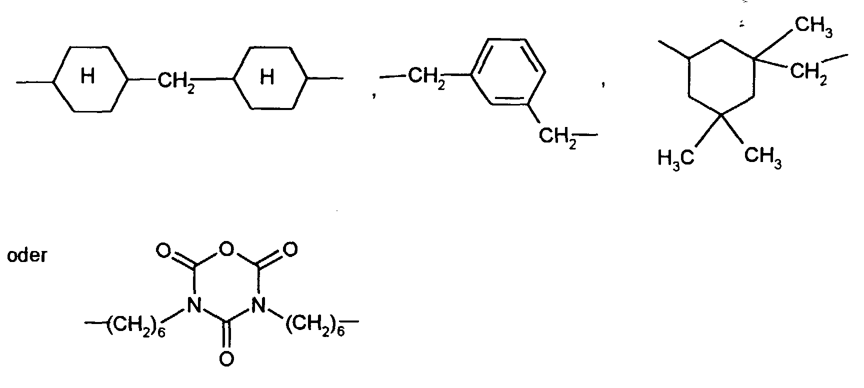 bedeutet.

Ganz besonders bevorzugt sind Verbindungen der Formel (I), (Ia) oder (Ib), worin
- X: für 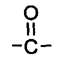 oder einen Rest einer Dicarbonylverbindung der Formel 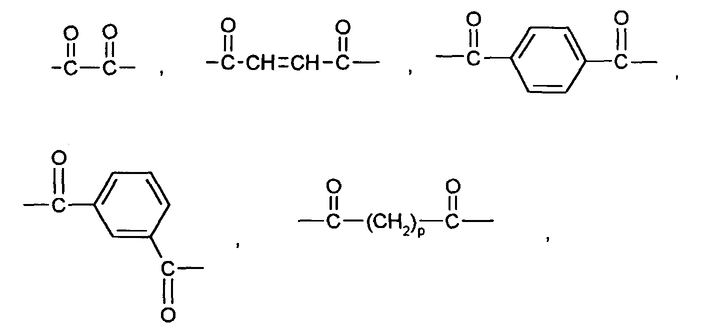 worin p für eine Zahl von 1 bis 6 steht
oder für einen bivalenten Rest der Formel 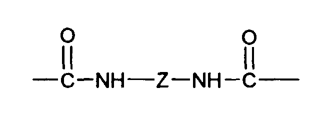
steht, worin Z die angegebene Bedeutung hat, oder
- X: einen Rest der Formel 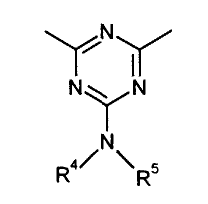 bedeutet, worin R⁴ und R⁵ die oben angegebenen Bedeutungen haben.

Ganz besonders bevorzugt sind Verbindungen der Formel (Ib), worin
- R²: für SO₃H oder COOH, insbesondere SO₃H steht und
- X: für 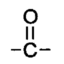 oder einen Rest einer Dicarbonylverbindung der Formel 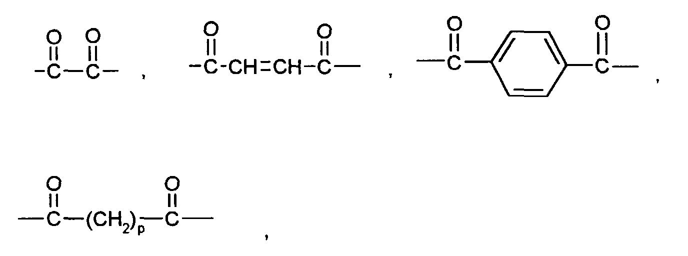 mit p bedeutet eine Zahl von 1 bis 6,
oder X für einen Rest der Formel 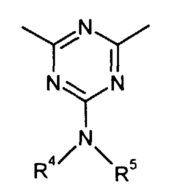 steht, worin R⁴ und R⁵ die oben angegebenen Bedeutungen haben, bevorzugt steht NR⁴R⁵ für Diethanolamin, Ethanolamin, Ethylpiperazin, Hydroxyethylpiperazin, Morpholin oder Methylamin.

Besonders bevorzugt ist das Brückenglied X nicht faserreaktiv.

Die Verbindungen der Formeln (I), (Ia) und (Ib) können im Rahmen dieser Anmeldung als freie Säure, als Salz von Alkalimetallen wie Lithium, Natrium oder Kalium, oder als unsubstituiertes oder substituiertes Aminoniumsalz vorliegen, wobei insbesondere auch gemischte Salze möglich sind. In Salzen enthaltend als Kation substituiertes Ammonium, kann sich dieses von einem primären, sekundären oder tertiären Amin ableiten, beispielsweise sind die folgenden Amine geeignet: Mono-, Di- oder Trimethyl-, -ethyl-, -propyl- oder -butyl-amin; Mono-, Di- oder Tri-ethanol-, -propanol- oder -Isopropanol-amin; N-Methyl-N-hydroxyethylamin, N-Methyl-N,N-di(hydroxyethyl)amin, N-Ethyl-N-hydroxyethylpiperazin; Ethylendiamin, Hexamethylendiamin; Dimethylaminopropylamin, Diethlaminopropylamin, Diethylenglykolamin, Diglykolamin und 3-Methoxypropylamin.

Als Amine sind auch Polyglykolamine geeignet, die beispielsweise durch Umsetzung von Ammoniak, Alkyl- oder Hydroxyalkylamin mit Alkylenoxiden erhalten werden können.

Als substituiertes Ammoniumion kann auch ein quaternäres Ammoniumion vorliegen, das sich von Ammoniumverbindungen ableitet, die bevorzugt ein oder zwei quaternäre Ammoniumionen enthalten, beispielsweise sind zu nennen: Tetramethyl-, Tetraethyl-, Trimethylethyl-, Dimethyl-di-(2-hydroxypropyl)-, Trimethylhydroxyethyl-, Tetrahydroxyethyl- und Trimethylbenzyl-ammoniumhydroxid.

Die Erfindung betrifft weiterhin ein Verfahren zur Herstellung von Verbindungen der Formel (I), das dadurch gekennzeichnet ist, daß man einen Azofarbstoff der Formel (II) 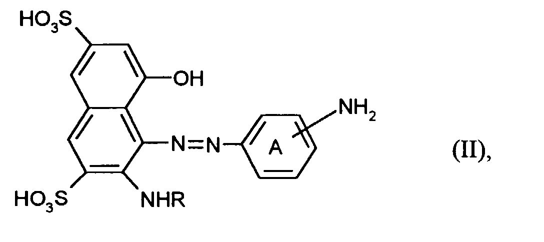 insbesondere einen Farbstoff der Formel (IIa) 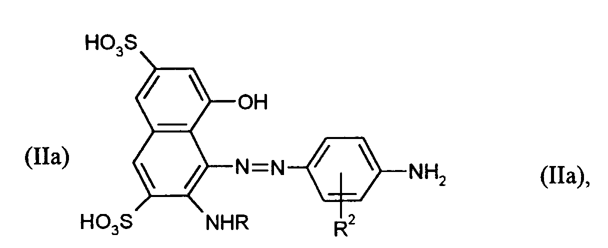 worin R, R² und A die oben angegebenen Bedeutungen haben,
mit reaktiven Verbindungen umsetzt, die mindestens zwei gegenüber primären oder sekundären Aminen reaktive Gruppen enthalten, wobei das molare Verhältnis des Monoazofarbstoffes der Formel (II) zur reaktiven Verbindung ≥ 2:1 beträgt. Natürlich sind auch kleinere Verhältnisse möglich, jedoch führen sie zu keinem stöchiometrischen Umsatz. Ein Verhältnis von (II) zur reaktiven Verbindung, was größer als 3:1 ist, führt zwar ebenfalls zum gewünschten Zielprodukt, jedoch ist diese Verfahrensvariante als unökonomisch zu bezeichnen.

Für den Fall, daß die reaktive Verbindung mehr als zwei gegenüber primären oder sekundären Aminen reaktive Gruppen enthält, die auch als faserreaktive Reste wirken können, können diese in einer Anschlußreaktion beispielsweise durch Hydrolyse, Alkoholyse oder Aminolyse in nicht faserreaktive Gruppen überführt werden.

In einer bevorzugten Ausführungsform des erfindungsgemäßen Verfahrens wird als reaktive Verbindung Phosgen, aliphatische-, aromatische-, carbocyclische-, heterocyclische- oder aromatisch-heterocyclische Dicarbonsäuren oder deren Derivate, wie Ester, Halogenide, insbesondere Chloride oder Isocyanate, oder Dihalogenheterocyclen der Formel 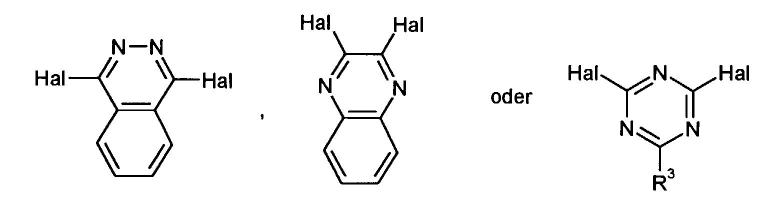 worin
- R³: die oben genannte Bedeutung hat oder für Hal steht, sofern Hal in einer Nachfolgereaktion mit H-R³ bei Temperaturen von 50 bis 100°C in einen Rest R³ überführt wird (vgl. DE-A 4 005 551), und
- Hal: unabhängig voneinander für Halogen, insbesondere für Cl, Br oder F steht, eingesetzt.

Die Reaktionsbedingungen zur Herstellung der Verbindungen der Formel (I) lassen sich beispielsweise aus EP-A 361 186 übertragen.

Die Erfindung betrifft weiterhin ein Verfahren zur Herstellung von Verbindungen der Formel (I), das dadurch gekennzeichnet daß man Diamine der Formel (III) 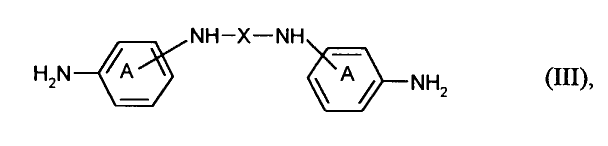 worin X und A die obige Bedeutung haben,
tetrazotiert und mit Verbindungen der Formel (IV) 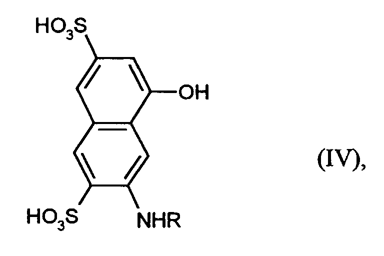 worin R die obige Bedeutung hat, kuppelt, wobei das molare Verhältnis von der Verbindung (IV) zum Diamin der Formel (III) ≥ 2:1 beträgt. Natürlich sind auch kleinere Verhältnisse möglich, jedoch führen sie zu keinem stöchiometrischen Umsatz. Ein Verhältnis von (IV) zum Diamin (III), welches größer als 3:1 ist, führt zwar ebenfalls zum gewünschten Zielprodukt, jedoch ist diese Verfahrensvariante als unökonomisch zu bezeichnen.

Die Tetrazotierung des Diamins der Formel (III) erfolgt unter üblichen Reaktionsbedingungen, wie sie beispielsweise in Houben-Weyl, Band X/3, S. 43 ff beschrieben sind. Die Kupplung von der tetrazotierten Verbindung der Formel (III) und der Verbindung der Formel (IV) erfolgt vorzugsweise unter sauren Bedingungen, insbesondere bei einem pH-Wert von 1 bis 5,5. Entsprechende Reaktionsbedingungen sind beispielsweise in Houben-Weyl, Band X/3, S. 287 ff offenbart.

Die erfindungsgemäßen Verbindungen der Formel (I) sind solche, deren Drucke vorzugsweise den Farbtonbereich abdecken, der im coloristischen Sinne vorzugsweise mit den mit den Parametern des CIELAB-Systems (1976) bestimmten Farbton h im Bereich von vorzugsweise 270 bis 360°, insbesondere von 300 bis 345°, beschrieben werden kann. (CIELAB-System (1976) = farbmetrisches Ordnungssystem, z.B. Brockes, A. et al., Farbmessung in der Textilindustrie, JSSN 0722-0391, 1986 Mitteilungen für die Farbstoffe verarbeitende Industrie, 24. Jahrgang). Die Angaben für den Farbtonwinkel h gelten insbesondere auf normalem, geleimten Papier mit einem Oberflächen pH-Wert von 6.7 (beispielsweise Agfa Copypaper 701).

Die Verbindungen der Formel (I) werden vorzugsweise als Farbstoffe zum Färben und Bedrucken von hydroxyl- und/oder amidgruppenhaltigen Substraten eingesetzt und färben cellulosehaltige Materialien, Wolle, Baumwolle, Viskose, Polyamid, Leder sowie Papier in brillanten magenta oder blaustichig roten Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Massenwie in der Oberflächenfärbung von Papier für geleimte oder ungeleimte Sorten, ausgehend von gebleichten oder ungebleichten Zellstoff verschiedener Provenienz wie Nadel- oder Laubholz-sulfit- und/oder -sulfat-Zellstoff Sie können auch in Garn- und Stückfärberei von Baumwolle, Viskose und Leinen nach dem Ausziehverfahren aus langer Flotte oder in Kontinueverfahren angewandt werden.

Weiterer Gegenstand der Erfindung ist ein Verfahren zum Färben von cellulosehaltigen Materialien mit den Verbindungen der Formel (I).

Die erfindungsgemäßen Verbindungen der Formel (I) können als feste oder flüssige Farbstoffpräparationen eingesetzt werden. Sie werden vorzugsweise in Form von wäßrigen Präparationen, insbesondere von Lösungen eingesetzt. Diese wäßrigen Farbstoffpräparationen enthalten im allgemeinen einen oder mehrere Farbstoffe der Formel (I), gegebenenfalls geeignete organische Lösungsmittel, worunter auch hydrotrope Verbindungen zählen können sowie weitere Hilfsmittel und/oder Stabilisatoren.

Die Anwendungsform der wäßrigen Farbstoffpräparationen ist insbesondere beim Färben oder Bedrucken von Papier bevorzugt. Die Herstellung einer stabilen, flüssigen, wäßrigen, konzentrierten Färbepräparation kann auf allgemein bekannte Weise erfolgen, durch Lösen des Farbstoffes in Wasser, gegebenenfalls unter Zugabe eines oder mehrerer Hilfsmittel, z.B. einer hydrotropen Verbindung oder eines Stabilisators. Von besonderem Vorteil ist die Herstellungsmöglichkeit solcher stabiler, wäßrig-konzentrierten Präparationen im Zuge der Farbstoffsynthese selbst ohne Zwischenisolierung des Farbstoffes.

Die wäßrigen Farbstoffpräparationen enthalten im allgemeinen etwa 0,5 bis 20 Gew.-% eines oder mehrerer Farbstoffe der Formel (I) und 80 bis 99,5 Gew.-% Wasser und/oder organisches Lösungsmittel sowie gegebenenfalls weitere übliche Bestandteile.

Bevorzugte organische Lösungsmittel sind dabei Alkohole und deren Ether oder Ester, Carbonsäureamide, Harnstoffe, Sulfoxide und Sulfone, insbesondere solche mit Molekulargewichten < 200. Besonders geeignete Lösungsmittel sind beispielsweise: Methanol, Ethanol, Propanol; Ethylen-, Propylen-, Diethylen-, Thiodiethylen- und Dipropylen-glykol; Butandiol; β-Hydroxypropionitril, Pentamethylenglykol, Ethylenglykolmonoethyl- und -propylether, Ethylendiglykolmonoethylether, Triethylenglykolmonobutylether, Butylpolyglykol, Formamid, Triethylenglykol, 1,5-Pentandiol, 1,3,6-Hexantriol, Essigsäure-2-hydroxyethylester, Essigsäure-2-(2'-hydroxyethoxy)-ethylester, Glycerin, Glykolacetat, 1,2-Dihydroxypropan, 1-Methoxy-2-propanol, 2-Methoxy-1-propanol, N,N-Dimethylformamid, Pyrrolidon, N-Methyl-caprolactam, ε-Caprolactam, N-Ethyl-caprolactam, Butyrolacton, Harnstoff, Tetramethylharnstoff 1,3-Dimethyl-2-imidazolidinon, N,N'-Dimethylolpropylenharnstoff, Dimethylsulfoxid, Dimethylsulfon, Sulfolan, Isopropanol, Polyethylenglykol.

Als weitere für wäßrige Farbstoffpräparationen, insbesondere für Drucktinten übliche Zusätze kommen solche ionischen oder nichtionischen Stoffe in Frage, mit denen die Viskosität und/oder Oberflächenspannung in die für die Anwendung erforderlichen Bereiche eingestellt werden kann, wie beispielsweise anionische, kationische oder neutrale Tenside wie Dispergiermittel und Viskositätsregulatoren. Die Funktion von Viskositätsregulatoren kann beispielsweise von den organischen Lösungsmitteln übernommen werden.

Bevorzugt sind wäßrige Farbstoff-Präparationen, insbesondere Farbstoff-Lösungen mit folgender Zusammensetzung:
- 0,5 bis 20 Gew.-%, insbesondere 1 bis 15 Gew.-% eines oder mehrerer Farbstoffe der genannten Art,
- 50 bis 99,5 Gew.-%, insbesondere 85 bis 99 Gew.-% Wasser,
- 0 bis 50 Gew.-%, insbesondere 0 bis 20 Gew.-% eines oder mehrere organische Lösungsmittel,
- 0 bis 30 Gew.-%, insbesondere 0 bis 5 Gew.-% Viskosität und/oder Oberflächenspannung beeinflussende Zusätze,
wobei sich die Summe der genannten Inhaltsstoffe auf 100 Gew.-% ergänzt.

Die wäßrigen Farbstoffpräparationen können durch Auflösen der Farbstoffsalze in Wasser oder aus den Kondensationslösungen, die gegebenenfalls einem Ionenaustausch und/oder einer Entsalzung z.B. durch Druckpermeation unterworfen werden und/oder durch Zusatz eines oder mehrerer der obengenannten organischen Lösungsmitteln gegebenenfalls bei erhöhten Temperaturen (30 bis 100°C, insbesondere 30 bis 50°C) und unter Zusatz von anorganischen und organischen Basen hergestellt werden; gegebenenfalls können zusätzlich noch übliche ionische oder nichtionische Zusatzstoffe verwendet werden, z.B. solche, mit denen die Viskosität erniedrigt und/oder die Oberflächenspannung erhöht werden können.

Anstelle der Salze von (I) können auch die entsprechenden freien Säuren in Kombination mit mindestens äquimolaren Mengen der entsprechenden organischen oder organischen Basen eingesetzt werden.

Als anorganische Basen können z.B. Lithiumhydroxid, Natriumhydroxid, Kaliumhydroxid, Lithiumcarbonat, Natriumcarbonat, Kaliumcarbonat eingesetzt werden.

Als organische Basen können z.B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, N,N,N-Tris[2-(2'-hydroxyethoxy)-ethyl]-amin oder Natriummethylat, Lithiumethylat, Kalium-tert.-butylat dienen.

Die erfindungsgemäßen wäßrigen Farbstoffpräparationen eignen sich beispielsweise auch als Drucktinten, die insbesondere auch als Aufzeichnungsflüssigkeiten nach der Ink-Jet-Methode eingesetzt werden können.

Weiterer Gegenstand der Erfindung ist daher die Verwendung der erfindungsgemäßen wäßrigen Farbstoffpräparationen als Aufzeichnungsflüssigkeit für Ink-Jet-Aufzeichnungssysteme zur Erzeugung brillanter roter bis magenta Drucke.

Unter der Ink-Jet-Methode des erfindungsgemäßen Verfahrens wird ein Tintenstrahlaufzeichnungsverfahren verstanden, bei dem die Tintentropfen auf das Substrat gespritzt werden. Die feinen Tintentröpfchen können durch unterschiedliche Verfahren erzeugt werden. Bevorzugt werden sie nach den allgemein bekannten Thermal-Jet (beispielsweise Bubble Jet), Piezo Jet oder Ventil-Ink-Jet-Verfahren erzeugt. Bevorzugtes Aufzeichnungsmaterial für den Ink-Jet-Drucker ist Papier.

Bei der Verwendung der erfindungsgemäßen wäßrigen Farbstoffpräparationen als Aufzeichnungsflüssigkeit für Ink-Jet-Aufzeichnungssysteme ergeben sich folgende Vorteile: Die physikalischen Eigenschaften, wie Viskosität, Oberflächenspannung und dergleichen, liegen in den geeigneten Bereichen, die Aufzeichnungsflüssigkeit verursacht keine Verstopfüngen in feinen Abgabeöffnungen von Tintenstrahl-Aufzeichnungsvorrichtungen; sie liefert Bilder von hoher Dichte; bei der Lagerung kommt es in der Aufzeichnungsflüssigkeit nicht zu einer Veränderung von physikalischen Eigenschaften und zur Ablagerung von festen Bestandteilen; die Aufzeichnungsflüssigkeit eignet sich zur Aufzeichnung auf verschiedenen Aufzeichnungsmedien ohne Beschränkungen hinsichtlich der Art der Aufzeichnungsmedien; schließlich fixiert die Aufzeichnungsflüssigkeit rasch und ergibt Bilder mit ausgezeichneter Wasserfestigkeit, Lichtechtheit, Abriebbeständigkeit und Auflösung.

Magenta-(Purpur)-Farbstoffe sind neben Gelb und Cyan für die Trichromie essentiell. Die bekannten für den Ink-Jet-Druck eingesetzten Magenta-Farbstoffe zeigen jedoch im allgemeinen gegenüber den beiden anderen Farbtönen eine geringere Lichtechtheit, vor allem auf Papier. Dies ist besonders für den Einsatz von Ink-Jet-Druckern von großem Nachteil.

Die erfindungsgemäßen Farbstoffe haben im Vergleich zu C.I. Direkt Rot 75 ein vorzugsweise um 10 bis 30 nm höheres Absorptionsmaximum vorzugsweise 529 bis 549 nm, gemessen bei pH 8 in Wasser.

Sie besitzen darüber hinaus eine höhere Brillanz, meßbar am Chroma C*-Wert des CIELAB-Systems sowie eine bessere Lichtechtheit, charakterisiert durch einen geringen ΔE*-Wert (Farbdifferenz) des CIELAB-Systems.

Die folgenden Herstellungsbeispiele sollen die vorliegende Erfindung erläutern ohne sie jedoch darauf zu beschränken. In den Beispielen bedeuten Teile stets Gewichtsteile, falls nichts anderes angegeben ist.

### Beispiele

### Beispiel 1

80g (0,2 mol) Diamin der Formel 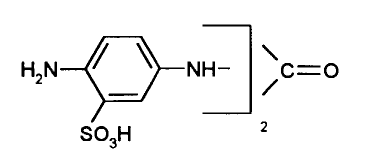 wurden mit 320 ml Wasser 1h intensiv verrührt und danach mit 90 ml konz. Salzsäure versetzt. Man tetrazotierte mit 92 ml einer 30 %igen NaNO₂-Lösung bei einer Temperatur von kleiner 30°C. Nach 1h wurde überschüssiges Nitrit mit Amidosulfonsäure zerstört.

Diese Suspension der Tetrazoverbindung wurde innerhalb von 10 min zu einer Lösung von 130 g (0,4 mol) R,R-Säure (2-Amino-8-hydroxynaphthalin-3,6-disulfonsäure) in 800 ml Wasser gegeben. Mit Natriumacetat-Lösung stellte man einen pH von 4 bis 5 ein und beließ die Reaktion bei 8 bis 12°C für 12h. Nachdem die Kupplung beendet war, erhitzte man innerhalb von 1 - 2 h auf 50°C und stellte den pH mit verd. Natronlauge auf 9. Durch Zugabe von 270 g Kochsalz wurde der Farbstoff ausgefällt und bei 30°C isoliert. Nach dem Trocknen bei 70°C im Vakuum erhielt man 210 g des salzhaltigen Farbstoffes der Formel 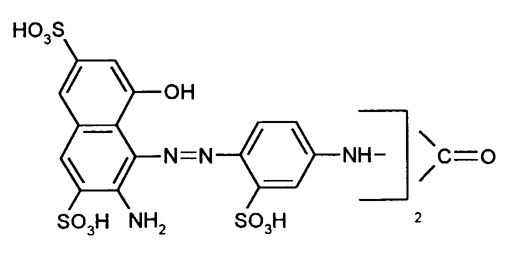 als Na₆-Salz
λₘₐₓ (pH 8, Wasser): 549, 527 nm

Der Farbstoff färbt Papier in der Masse nach den üblichen Methoden in klaren, blaustichtig, roten Tönen.

### Beispiel 2

207 g (0,4 mol) des Farbstoffes der Formel 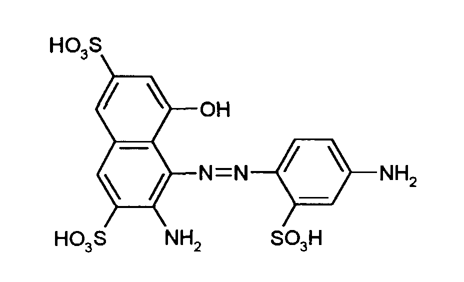 wurden als Na₃-Salz in 3 l Wasser unter Zugabe von LiOH bei pH 9,5 gelöst. Unter Einhalten des pH-Wertes bei pH 7 bis 8 mit LiOH-Lösung wurde bei einer Temperatur unterhalb von 45°C solange Phosgen eingeleitet bis die Acylierung beendet war. Das Reaktionsprodukt fiel zum Teil aus. Durch Zugabe von 400 Teilen LiCl wurde die Ausfällung vervollständigt. Der Feststoff wurde abfiltriert und bei 70°C im Vakuum getrocknet. Man erhielt 225 g eines salzhaltigen Farbstoffes der Formel entsprechend Beispiel 1 als Li₆-Salz. Das Absorbtionsmaximum und der Farbton bei der Papierfärbung sind identisch mit denen der Verbindung aus Beispiel 1.

### Beispiel 3

Verfuhr man analog Beispiel 2, löste jedoch das Na₃-Salz in 4 l Wasser unter Zugabe von NaOH und phosgenierte in Gegenwart von NaOH-Lösung, so erhielt man nach Aussalzen mit NaCl und Trocknen 230 g des selben Produktes wie in Beispiel 1.

### Beispiel 4

125 g des salzhaltigen Farbstoffs von Beispiel 1, wurden in 4 l Wasser bei 40°C und einem pH-Wert von 8 gelöst. In einer üblichen Druckpermeationsanlage (mit z.B. Membran G 20® der Fa. Desal) wurde die Lösung auf 3 l aufkonzentriert und solange ultrafiltriert bis der Cl^{⊖}-Gehalt < 0,05 % betrug. Anschließend wurde auf ca. 2 l aufkonzentriert, so daß der Farbstoffgehalt 5,6 %, bezogen auf das Na₆-Salz, betrug.

Diese Lösung ist über längere Zeit stabil und wurde direkt zum Färben von Papier oder Baumwolle und zur Herstellung von Drucktinten für den Ink-Jet-Druck eingesetzt.

Entsprechend wurden auch aus den übrigen in den folgenden Beispielen beschriebenen Farbstoffe stabile, konzentrierte Lösungen erhalten

### Beispiel 5

Man verführ wie in Beispiel 2 beschrieben, salzte jedoch nicht mit LiCl aus, sondern brachte die bei der Phosgenierung anfallende Farbstoffsuspension durch Zugabe von ca. 1,5 l Wasser bei 45°C in Lösung. Dieser Lösung wurde analog Beispiel 4 auf einer Druckpermeationsanlage mit einer Membran G50® der Fa. Desal auf 2,5 l aufkonzentriert und solange diafiltriert bis der Cl^{⊖} -Gehalt < 0,05 % betrug. Danach wurde auf 1,7 l aufkonzentriert, so daß der Farbstoffgehalt 7,5 % betrug, bezogen auf das Li₆-Salz.

Auch diese Lösung wurde direkt zum Färben sowie zur Herstellung einer Drucktinte für den Ink-Jet-Druck eingesetzt und war über lange Zeit stabil.

### Beispiel 6

Verfuhr man wie in Beispiel 2 beschrieben, verwendete jedoch zum Lösen und Phosgenieren anstelle von LiOH Methyldiethanolamin, erhielt man nach Beendigung der Acylierung eine Suspension des Farbstoffes der Formel aus Beispiel 1. Diese Suspension wurde durch Zugabe von ca. 1,5 l Wasser bei 45 bis 50°C vollständig gelöst und analog Beispiel 5 ultrafiltriert. Zum Ausschleppen von Na^{⊕} setzt man nach und nach bei der Diafiltration 1 Mol Methyldiethanolamin zu und hielt den pH-Wert mit Essigsäure bei 8. Als der Cl^{⊖}-Gehalt weniger als 0,05 % betrug, wurde auf 1,8 l aufkonzentriert. Der Feststoffgehalt betrug 7,5 %, bezogen auf das Hexa-methyldiethanolammonium-Salz und der Na^{⊕}-Gehalt lag bei 0,1 %.

Diese Lösung wurde wie in Beispiel 5 beschrieben eingesetzt.

### Beispiel 7

207 g (0,4 mol) des Farbstoffs der Formel 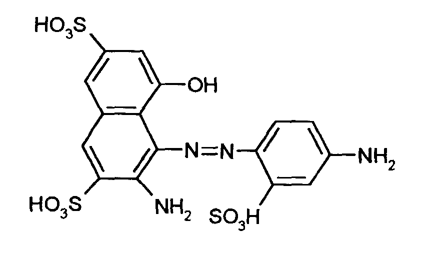 wurden als Na₃-Salz in 2,2 l Wasser unter Zugabe von LiOH bei pH 8,5 und einer Temperatur von 50 bis 60°C gelöst und mit insgesamt 40,6 g (0,2 mol) Terephthalsäuredichlorid innerhalb von 25 h versetzt. Der pH-Wert wurde mit LiOH während der gesamten Reaktionsdauer eingestellt. Nach beendeter Zugabe rührte man zur Vervollständigung der Reaktion noch weitere 25 h bei pH 8,5 und einer Temperatur von 55° bis 60°C. Anschließend wurden 200 g Kochsalz zugegeben, auf 40°C abgekühlt und der ausgefallene Farbstoff der Formel 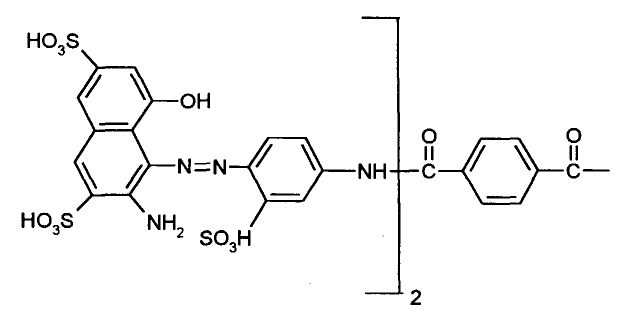 als Na₆-Salz
abfiltriert. Nach dem Trocknen des Farbstoffs wurden 235 g salzhaltigen Produkts erhalten. λₘₐₓ (pH 8, Wasser): 526 nm. Der Farbstoff färbt Papier in der Masse in blaustichigen roten Tönen. Er wurde auch analog Beispiel 4 entsalzt und die dabei erhaltene Lösung direkt zum Färben von Papier und Baumwolle sowie zur Herstellung von Tinten für den Ink-Jet-Druck eingesetzt.

### Beispiele 8 bis 13

Analog der in Beispiel 2 beschriebenen Methode wurden weitere wertwolle Magenta Azofarbstoffe der Formel I, worin X für CO steht, erhalten. Dabei wurden als Ausgangsprodukte Monoazofarbstoffe der Formel IIa eingesetzt. Dabei steht o bzw. m-für die ortho- bzw. meta-Position des Restes R² zur Azogruppe.

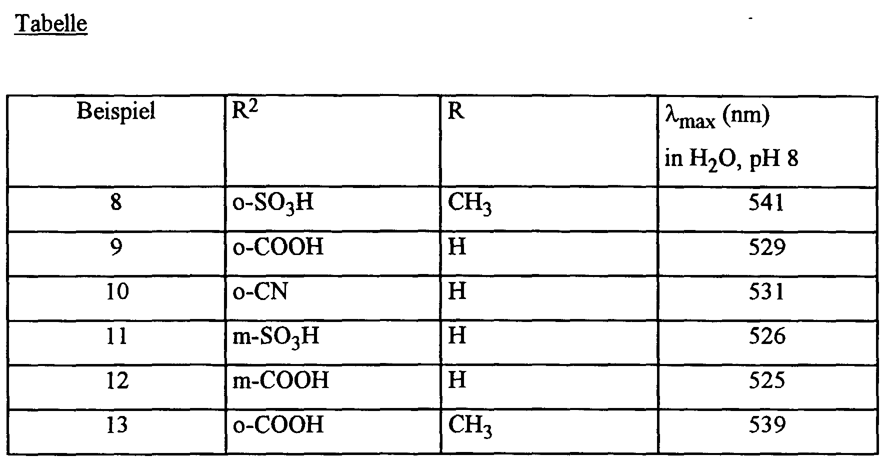

### Beispiel 14

207 g (0,4 mol) des Monoazofarbstoffes aus Beispiel 2 als Na₃-Salz wurden in 2 l Wasser unter Zugabe von LiOH bei pH 8 und einer Temperatur von 40° bis 45°C gelöst und innerhalb von 30 min in eine Suspension aus 40,6 g (0,22 mol) Cyanurchlorid, 250 g Eis und 150 g Wasser gegeben. Der pH-Wert wurde mit LiOH-Lösung auf 7 ± 0,5 gehalten. Die Reaktionsmischung wurde dann auf eine Temperatur von 50° bis 55°C für eine Stunde erwärmt. Dann wurden 42 g (0,4 mol) Diethanolamin zugegeben und 1,5 h bei 98° bis 110°C gerührt. Anschließend gab man 150g Kochsalz hinzu und isolierte nach Abkühlen auf eine Temperatur von 30°C den ausgefallenen Farbstoff durch Filtration. Nach dem Trocknen im Vakuum bei 70° bis 80°C erhielt man 285 g des salzhaltigen Farbstoffs der Formel 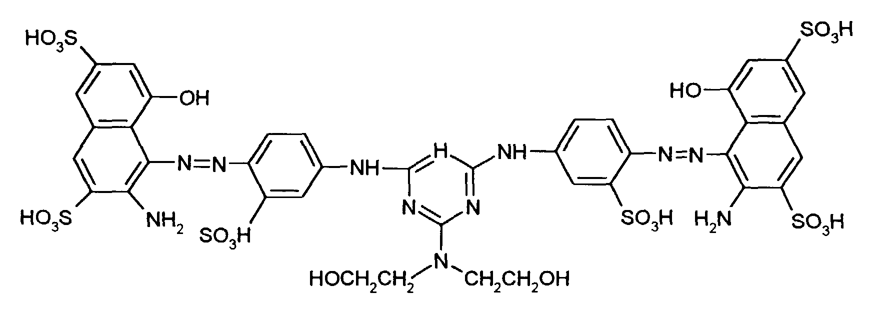 als Na₆-Salz
λₘₐₓ (pH 8, Wasser): 549 nm. Vergleichbare Farbstoffe mit gleichem λₘₐₓ-Wert wurden erhalten als man anstelle von Diethanolamin bei Substitution (des dritten Chloratomes die folgenden Amine einsetzte: Ethanolamin, Ethylpiperazin, Hydroxyethylpiperazin, Morpholin und Methyltaurin. Die so errhaltenen Farbstoffe wurden entsprechend dem Beispiel 4 entsalzt und die dabei erhaltenen Lösungen direkt zum Färben und zur Herstellung von Tinten für den Ink-Jet-Druck eingesetzt.

### Anwendungsvorschrift A

0,5 Teile des Farbstoffpulvers aus Beispiel 1 wurden in 100 Teilen heißem Wasser gelöst und auf Raumtemperatur abgekühlt. Die Lösung wurde zu 100 Teilen chemisch gebleichter Sulfitcellulose gegeben, die mit 2 000 Teilen Wasser in einem Holländer gemahlen worden war. Nach 15 min durch Mischung wurde auf übliche Art mit Harzleim und Aluminiumsulfat geleimt. Das so hergestellte Papier zeigte einen blaustichigen roten Farbton und besitzt gute Abwasser- und Naßechtheiten sowie eine gute Lichtechtheit.

### Anwendungsvorschrift B

50 Teile gebleichten Nadelholzsulfitzellstoffs und 50 Teile gebleichten Buchenzellstoffs (Mahlgrad 30° SR (°SR = Grad Schopper Riegler)) und 0,5 Teile des Farbstoffs aus Beispiel 1 wurden in Wasser (pH 4, Wasserhärte 10° dH) gemischt. Nach 16 min erfolgte die Blattbildung. Das erhaltene Papier ist intensiv blaustichig rot gefärbt. Eine Färbung bei pH 7 zeigt demgegenüber keine Stärke- oder Nuancenabweichung. Der Ausziehgrad erreichte 100 % und das Abwasser ist farblos.

### Anwendungsvorschrift C

100 g der Farbstofflösung aus Beispiel 4 wurden mit 50 g Pyrrolidon-2 und 370 g Wasser verrührt und über einen 0,8 µm-Filter geklärt. Mit dieser Tinte wurden die Tintenkartuschen der handelsüblichen Ink-Jet-Drucker befüllt, zum Beispiel HP-Desk Jet® 560, Canon BJC® 600 und BJC® 4000, und mit den entsprechenden Druckern brillante, lichtechte und ausblutechte Magentadrucke auf Papier erzeugt.

Anstelle von Pyrrolidon wurden auch die sonst üblichen organischen Lösungsmittel wie Di-, Triethylenglykol, Pentandiol-1,5, 1,2-Propylenglykol, Harnstoff und andere verwendet. Verwendete man eine Lösung enthaltend den Farbstoff aus Beispiel 7, wie sie gemäß den Angaben aus Beispiel 4 erhalten wurde, so erhielt man ebenfalls brillante, lichtechte und wasserechte Magentadrucke, die ein um 7 nm geringeres Absorbtionsmaximum haben.

### Vergleichsbeispiel

18 g der Farbstofflösung aus Beispiel 4, enthaltend den Farbstoff aus Beispiel 1, wurden mit 8 g Pentan-1,5-diol, 8 g Pyrrolidon-2 sowie 66 g destilliertem Wasser verdünnt, so daß eine Tinte mit einem Farbstoffgehalt von ca. 1 % und einem E¹₁-Wert von 5 erhalten wurde. Die Tinte wurde nach dem Klären über einen 0,4 µm-Filter in einer Tintenkatusche des HP-Desk Jet® 560 C gefüllt und auf verschiedenen Papieren mit diesem Drucker aufgebracht. Zum Vergleich wurde eine entsprechende Tinte mit einem nach Beispiel 4 gereinigten Direkt Rot 75 hergestellt, die ebenfalls einen E¹₁-Wert von 5 hatte und mit demselben Drucker auf den gleichen Papieren wie oben aufgebracht wurde. Für den Vergleich wurden 3 verschiedene Papiersorten eingesetzt:
1. Agfa Copy Paper 707
2. Gilberd Bond Paper
3. HP Premium Glossy Paper

Zu Vergleichszwecken wurden die maßgeblichen Parameter des CIELAB-Systems L*, a*, b*, C* sowie die ΔE*-Werte ermittelt. Der ΔE*-Wert stellt die Farbdifferenz des erhaltenen Druckes vor und nach einer jeweils 120 stündigen Belichtung mit einer D 65 Lichtquelle (Xenonlampe) dar. Zur Bedeutung der o.g. CIELAB-Parameter vergleiche Bayer-Farben-Revue Sonderheft 3/2d 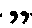 Farbmessung" 1986, ISSN 07220391. Bei dem Vergleich wurden die in der nachfolgenden Tabelle aufgeführten Daten erhalten.

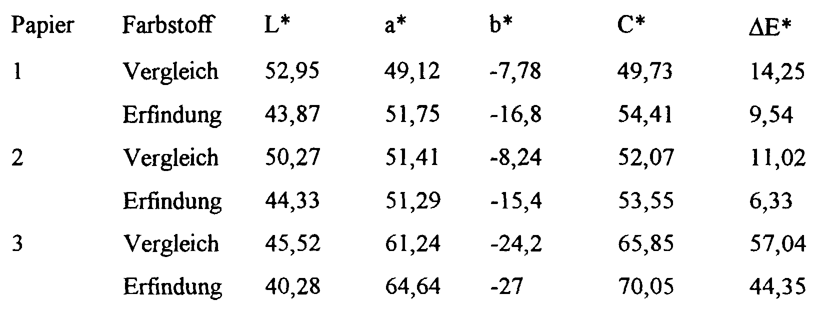

Aus den Daten läßt sich folgendes ableiten:
Die Chroma C* ist ein Maß für die Brillanz, die die vorliegende Erfindung zu verbessern versuchte. Je höher der C*-Wert, desto höher die Brillanz. Aus der Tabelle wird deutlich, daß für alle verwendeten Papierarten die Brillanz des erfindungsgemäßen Farbstoffs deutlich über der von Direkt Rot 75 liegt.

Der ΔE*-Wert ist ein Maß für die Lichtechtheit, da die Farbdifferenz vor und nach einer 120 stündigen Belichtung ermittelt wurde. Je größer der ΔE*-Wert desto größer ist die Abweichung in der Farbdifferenz, was wiederum ein Maß für die Lichtechtheit ist. Kleine ΔE*-Werte bedeuten somit eine bessere Lichtechtheit gegenüber größeren Werten, wobei diese Eigenschaft auf verschiedenen Papierarten unterschiedlich sein kann.

Der erfindungsgemäße Farbstoff zeichnet sich gegenüber dem Farbstoff Direkt Rot 75 übetraschenderweise durch eine verbesserte Brillanz sowie eine verbesserte Lichtechtheit auf allen geprüften Papierarten aus.

## Patentansprüche

1. Verbindungen, die in Form ihrer freien Säure der Formel (I) entsprechen 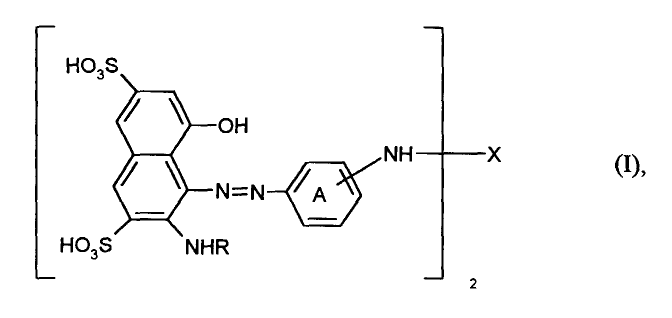 worin
X ein Brückenglied bedeutet,
der Ring A durch einen oder mehrere gleiche oder verschiedene Reste ausgewählt aus der Gruppe SO₃H, COOH, Sulfonsäureester, -amide, Carbonsäureester, -amide und CN substituiert ist
und
R Wasserstoff oder unsubstituiertes oder substituiertes C₁-C₄-Alkyl bedeutet.

2. Verbindungen gemäß Anspruch 1, die in Form ihrer freien Säure der Formel (Ia) entsprechen 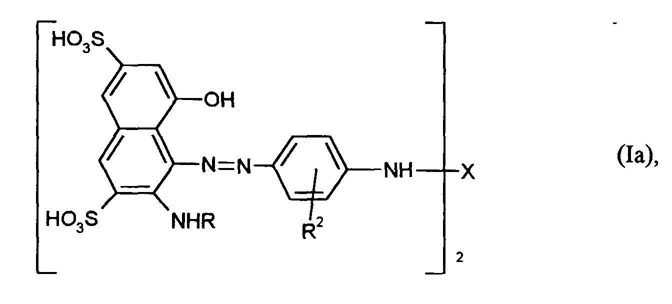 worin
R² für SO₃H, COOH oder CN steht.

3. Verbindungen gemäß Anspruch 1, die in Form ihrer freien Säure der Formel (Ib) entsprechen 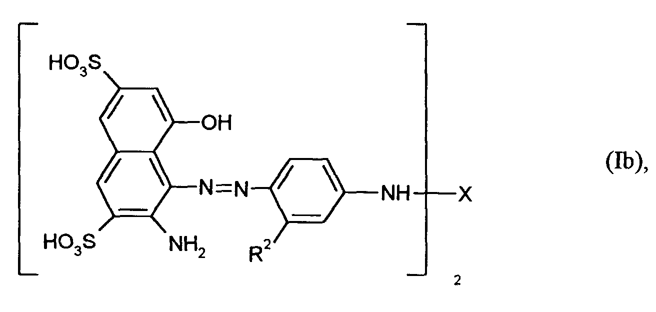 worin
R² für SO₃H oder COOH oder CN, insbesondere SO₃H oder COOH stehen.

4. Verbindungen gemäß Anspruch 1, worin X für CO, einen Rest einer aliphatischen, aromatisch-carbocyclischen-, heterocyclischen oder aromatisch-heterocyclischen Dicarbonylverbindung oder für einen Rest der Formel 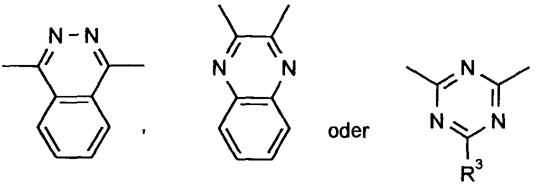 steht,
worin
R³ für OH, C₁-C₄-Alkoxy, C₆-C₁₀-Aryloxy, C₆-C₁₀-Aryl, C₁-C₄-Alkyl, C₁-C₄-Alkylmercapto oder Phenylmercapto, NH₂, mono- oder disubstituiertes Amin oder einem 5- oder 6-gliedrigen Amin steht.

5. Verbindung gemäß Anspruch 1, worin
X für 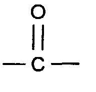 oder einen Rest einer Dicarbonylverbindung der Formel 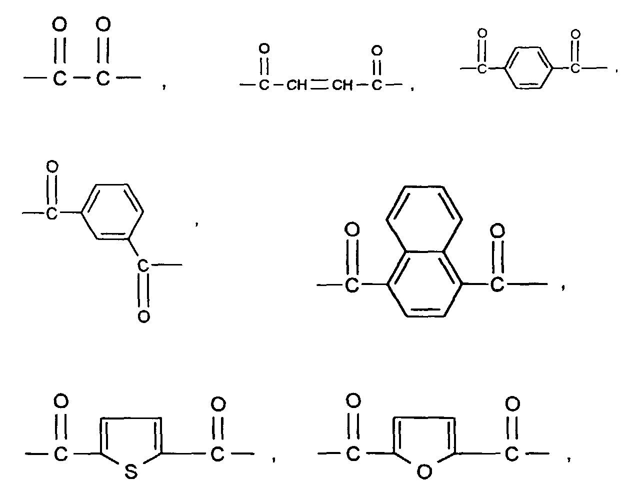 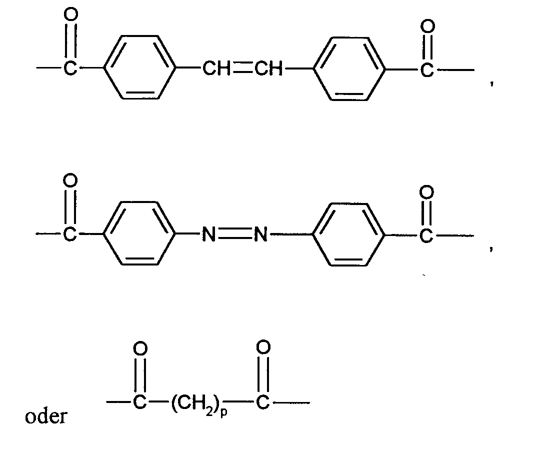 steht,
worin
p eine Zahl von 1 bis 6 bedeutet oder
X für einen bivalenten Rest der Formel 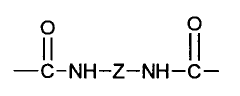 steht,
worin Z 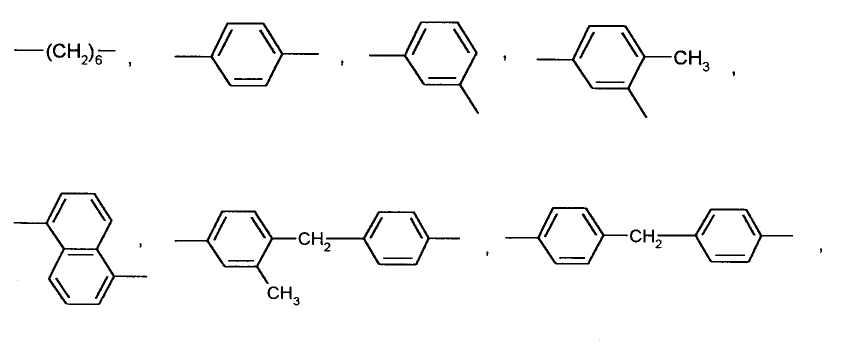 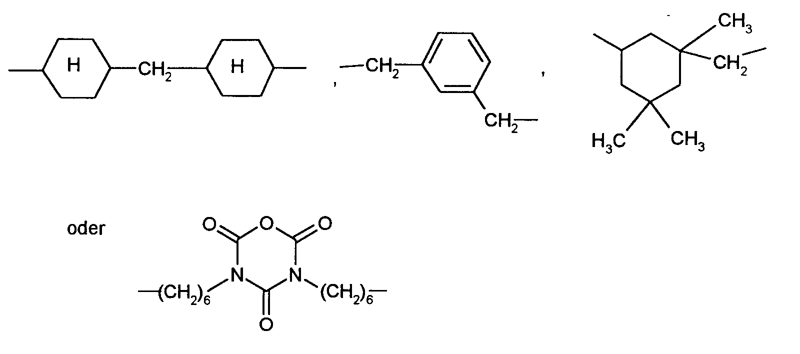 bedeutet.

6. Verbindung gemäß Anspruch 1, worin
X für 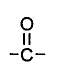 oder einen Rest einer Dicarbonylverbindung der Formel 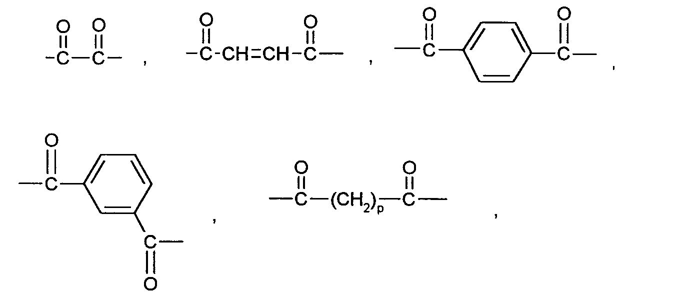 worin p für eine Zahl von 1 bis 6 steht, oder
X für einen Rest der Formel 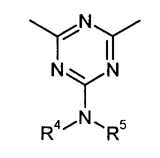 steht, worin
R⁴ und R⁵ unabhängig voneinander Wasserstoff, C₁-C₄-Alkyl, C₂-C₄-Hydroxyalkyl oder C₂-C₄-Hydroxyalkoxy-C₂-C₄-alkyl bedeuten oder NR⁴R⁵ einen 5- oder 6-gliedrigen Ring bildet, der 1 bis 3 Heteroatome einschließt und der unsubstituiert oder substituiert ist durch 1 bis 3 Substituenten aus der Reihe C₁-C₄-Alkyl und durch Hydroxy oder Amino monosubstituiertes C₂-C₄-Alkyl, und deren Salze.

7. Verbindung gemäß Anspruch 1, die in Form ihrer freien Säure der Formel 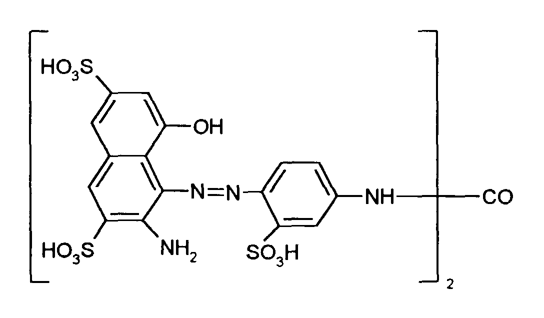 oder der Formel 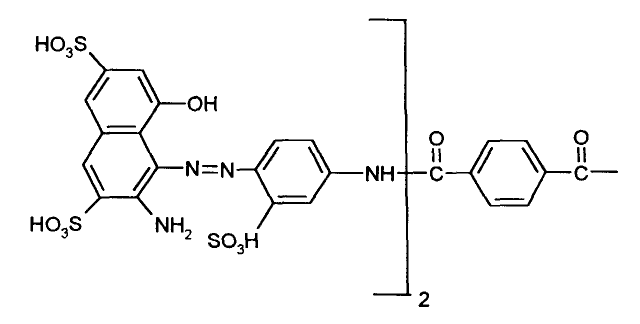 entspricht.

8. Verfahren zur Herstellung von Verbindungen der Formel (I) gemäß Anspruch 1, dadurch gekennzeichnet, daß man einen Monoazofarbstoff der Formel (II) 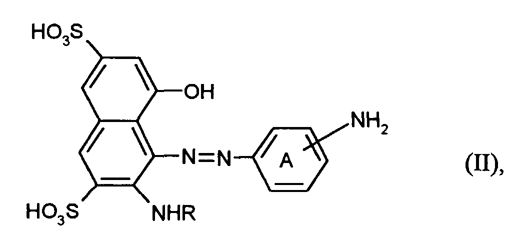 mit reaktiven Verbindungen umsetzt, die mindestens zwei gegenüber primären oder sekundären Aminen reaktive Gruppen enthalten, wobei das molare Verhältnis des Monoazofarbstoffs der Formel (II) zur reaktiven Verbindung ≥ 2:1 beträgt oder
daß man Diamine der Formel (III) 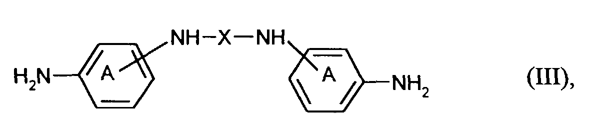 worin R, X und A die in Anspruch 1 angegebene Bedeutung haben,
tetrazotiert und mit Verbindungen der Formel (IV) 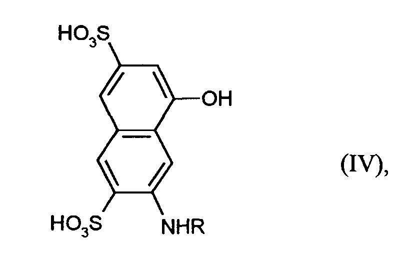 worin R die obige Bedeutung hat, kuppelt, wobei das molare Verhältnis von der Verbindung (IV) zum Diamin der Formel (III) ≥ 2:1 beträgt.

9. Wäßrige Farbstoff-Präparationen enthaltend 0,5 bis 20 Gew.-% einer Verbindung gemäß Anspruch 1, und 80 bis 99,5 Gew.-% Wasser und/oder organisches Lösungsmittel.

10. Verwendung der Verbindungen gemäß Anspruch 1 zum Färben und Bedrucken hydroxyl- und/oder amidgruppenhaltiger Substrate, insbesondere zum Bedrucken von Papier nach der Ink-Jet-Methode.

11. Verwendung der wäßrigen Farbstoff-Präparationen gemäß Anspruch 9 als Drucktinten für den Ink-Jet-Druck.
